# EUROPEAN PATENT APPLICATION

(11) **EP 1 770 288 A1**
(43) Date of publication of application: **04.04.2007**
(21) Application number: 05755719.1
(22) Date of filing: 29.06.2005
(51) Int. Cl.: F16C 11/04, H04M 1/02, H04M 1/12

(54) **DOUBLE SPINDLE HINGE AND PERSONAL DIGITAL ASSISTANT HAVING THE SAME**

(30) Priority: 29.06.2004 JP 2004190997
(71) Applicant: MATSUSHITA ELECTRIC INDUSTRIAL CO., LTD., Osaka 571-8501 (JP)
(72) Inventor: KOSUGI, Satoshi c/o Mat.Elec.Ind.Co.Ltd. IP D. C., Chuo-ku Osaka-shi Osaka 540-6319 (JP)
(74) Representative: Grünecker, Kinkeldey, Stockmair & Schwanhäusser Anwaltssozietät
(86) International application number: PCT/JP2005/011984
(87) International publication number: WO 2006/001484

(57) **Abstract**

There is provided a portable information terminal having a 2-axis hinge which can make two casings that are foldably and rotatably coupled developable in opening and rotation, and can hold the developed posture.

The portable information terminal includes a first casing, a second casing, and a 2-axis hinge which couples the first casing and the second casing in an openable and relatively rotatable manner. The 2-axis hinge includes an opening and closing shaft part provided for the first casing, a housing which is held by the opening and closing shaft part in a rotatable state around an axis in the axial direction of the opening and closing shaft part, and a rotary shaft part which couples the housing and the second casing in a relatively rotatable manner around an axis in the vertical direction to the axial direction of the opening and closing shaft part. Herein, the rotary shaft part has a first engaging part at an end portion on the housing side, and the opening and closing shaft part has a second engaging part which can engage with the first engaging part. The first engaging part and the second engaging part, when the first casing and the second casing are opened at a predetermined angle (A), are disengaged from each other thereby to make the first casing and the second casing relatively rotatable, and the first engaging part and the second engaging part, when the open angle formed by the first casing and the second casing is not the predetermined angle (B), are engaged with each other thereby to make the relative rotation of the first casing and the second casing impossible. Further, the first engaging part and the second engaging part are formed so that the combined shape of a section of the first engaging part and a section of the second engaging part becomes nearly circular in the above (A) state.

## Description

### <Technical Field>

The present invention relates to a portable information terminal provided with a 2-axis hinge which can make two casings that are foldably and rotatably connected developable in opening and closing / rotation, and can hold the developed posture.

### <Background Art>

As a conventional mobile telephone, a foldable type has been known, which includes a monitor casing that has a monitor part, and an operational casing that has an operational part, which are connected openably and closeably. Further, a type has been also developed, which has a camera arranged on a side surface of the operational casing, and is provided with a 2-axis hinge which can obtain operational properties similar to those in a video camera by rotation of the monitor casing.

However, in case that a user has erroneously dropped the mobile telephone in a state where the monitor casing is distorted at 90 degrees, for example, during image picking-up by means of the camera, there is dangerous possibility that the monitor casing collides with the operational casing thereby to break down the operational casing.

Therefore, in case that the monitor casing is used in the distorted state, it is necessary to provide a rotation regulating mechanism in order to make a rotary shaft of the 2-axis hinge unopenable and uncloseabl. As conventional technical means, there is a video camera mounted with a 2-axis hinge disclosed in Patent Document 1. In this 2-axis hinge, a flat convex cam is provided for an axial end of a rotary shaft connected to a display part, and a cam groove which engages with this convex cam is provided for a frame fixed through an attachment plate to a display body accommodating part. The display part, when an open angle is another angle than 90 degrees, cannot turn due to engagement between the cam groove and the convex cam. However, the display part, when the open angle comes to 90 degrees, can turn due to disengagement between the cam groove and the convex cam.
Patent Document 1: JP-A-10-290385

### <Disclosure of the Invention>

### <Problems that the Invention is to Solve>

However, in the 2-axis hinge in the conventional example, the area with which the cam groove engages reaches the entire area of the open angle. Therefore, the size of the frame having the cam groove increases.

Further, in this structure, wiring between the display part and the display body accommodating part is drawn around the outside of the 2-axis hinge. In this case, the wiring is wound around a rotary shaft. Therefore, it is necessary to provide extra length for wiring length so that a winding diameter can correspond to a matter that the wiring catches the display part by the rotation of the display part. In result, space where the wiring is drawn around also increases.

The invention has, in a portable information terminal having a 2-axis hinge provided with rotation regulating structure, an object to provide 2-axis hinge structure and wiring structure in which size reduction and weight reduction are possible.

### <Means for Solving the Problems>

A portable information terminal according to a first aspect of the invention includes a first casing, a second casing, and a 2-axis hinge which couples the first casing and the second casing in an openable and relatively rotatable manner. The axis hinge includes an opening and closing shaft part provided for the first casing, a housing which is held by the opening and closing shaft part in a rotatable state around an axis in the axial direction of the opening and closing shaft part, and a rotary shaft part which couples the housing and the second casing in a relatively rotatable manner around an axis in the vertical direction to the axial direction of the opening and closing shaft part. Here, the rotary shaft part has a first engaging part at a housing side-end portion, and the opening and closing shaft part has a second engaging part which can engage with the first engaging part. The first engaging part and the second engaging part, when the first casing and the second casing are opened at a predetermined angle (A), are disengaged from each other thereby to make the first casing and the second casing relatively rotatable. The first engaging part and the second engaging part, when the open angle formed by the first casing and the second casing is not the predetermined angle (B), are engaged with each other thereby to make the relative rotation of the first casing and the second casing impossible. Further, the first engaging part and the second engaging part are formed so that the combined shape of a section of the first engaging part and a section of the second engaging part becomes nearly circular in the above (A) state.

By this constitution, even in case that the opening and closing shaft is formed smaller in diameter for the purpose of size reduction of the portable information terminal, it is possible to keep strength of rotary regulation, so that size reduction/weight reduction can be carried out in the portable information terminal having the 2-axis hinge.

The housing may have a hollow part formed in a direction which coincides with the axial direction of the opening and closing shaft part and the axial direction of the rotary shaft part, and the rotary shaft may have a hollow part and may be arranged in the hollow part of the housing. In this case, a cable connected between the first casing and the second casing can be arranged in the hollow part of the rotary shaft part.

In this 2-axis hinge structure, also in case that the rotary shaft has hollow structure, the rotary regulation is possible. Therefore, when a wiring is inserted into the hollow rotary shaft and drawn around, even in case that a display body rotates, the wiring is never caught in. Space for arranging the wire windings can be reduced, so that the portable information terminal having the 2-axis hinge can be made small in size and weight.

The opening and closing shaft may be arranged in the hollow part of the housing so as to be arranged at nearly right angles to the rotary shaft part.

The first engaging part can be formed by a groove having a semicircular section, and the second engaging part can be formed by a projection having a semicircular section, which can engage with the groove.

In place of the above constitution, the first engaging part can be formed also by a groove having an arched section, and the second engaging part can be formed also by a projection having a nearly D-shaped section, which can engage with the groove.

A portable information terminal according to a second aspect of the invention includes a first casing, a second casing, a 2-axis hinge which couples the first casing and the second casing in an openable and relatively rotatable manner, and a projection member which is attached to the end portion on the first casing side of the second casing, and protrudes in the thickness direction and the longitudinal direction of the second casing. The axis hinge includes an opening and closing shaft part provided for the first casing, a housing which is held by the opening and closing shaft part in a rotatable state around an axis in the axial direction of the opening and closing shaft part, and a rotary shaft part which couples the housing and the second casing in a relatively rotatable manner around an axis in the vertical direction to the axial direction of the opening and closing shaft part. Further, the first casing has, at an end portion on the second casing side, an accommodating concave part which has a width that is nearly equal to a width of the projection member and smaller than a thickness of the projection member. The projection member and the accommodating concave part, when the first casing and the second casing are opened at a predetermined angle (A), are released from the interference between each other thereby to make the first casing and the second casing relatively rotatable. The projection member and the accommodating concave part, when an open angle formed by the first casing and the second casing is not the predetermined angle (B), interfere with each other between their side surfaces thereby to make the relative rotation of the first casing and the second casing impossible.

The force applied in the rotation regulating time becomes moment load for the 2-axis hinge. Therefore, to form a rotation regulating mechanism in a position which is distant from a center of the opening and closing shaft can heighten more moment rigidity. This structure, since the rotation regulating mechanism can be constituted by means of a cover that is most distant from the opening and closing shaft, is advantage in strength. Further, since also the cover formed of material that is more lightweight than the metal material used in the 2-axis hinge can apply regulation, it is possible to reduce the weight of the portable information terminal.

Under the above constitution, a surface adjacent to the accommodating concave part of the first casing is formed into a plane surface, and when the first casing and the second casing rotate relatively, the first casing side end surface of the projection member comes into contact with the plane surface of the first casing. Further, at least a part of the housing may be exposed from the accommodating concave part and there may be further provided a housing cover arranged in the accommodating concave part so as to cover the housing.

In the portable information terminals according to the first and second aspects of the invention, the predetermined angle can be set at about 90 degrees.

Further, though the first casing may be an operational casing having an operational part, and the second casing may be a monitor casing having a monitor part, the second casing may be an operational casing having an operational part, and the first casing may be a monitor casing having a monitor part.

Further, the invention can be grasped as a 2-axis hinge for a portable information terminal having two casings coupled openably and relatively rotatably. The axis hinge includes an opening and closing shaft part, a housing which is held by the opening and closing shaft part in a rotatable state around an axis in the axial direction of the opening and closing shaft part, and a rotary shaft part held by the housing in a rotatable state, in relation to the housing, around an axis in the vertical direction to the axial direction of the opening and closing shaft part. The rotary shaft part has a first engaging part at a housing side-end portion, and the opening and closing shaft part has a second engaging part which can engage with the first engaging part. Here, the first engaging part and the second engaging part, when the opening and closing shaft part and the rotary shaft part are opened at a predetermined angle (A), are disengaged from each other thereby to make the opening and closing shaft part and the rotary shaft part relatively rotatable. The first engaging part and the second engaging part, when the open angle formed by the opening and closing shaft part and the rotary shaft part is not the predetermined angle (B), are engaged with each other thereby to make the relative rotation of the opening and closing shaft part and the rotary shaft part impossible. Further, the first engaging part and the second engaging part are formed so that the combined shape of a section of the first engaging part and a section of the second engaging part becomes nearly circular in the above (A) state.

### <Advantage of the Invention>

According to the invention, it is possible to provide a small-sized and lightweight portable information terminal which prevents unnecessary mutual rotation of casings.

### <Brief Description of the Drawings>

Fig. 1 is an exploded perspective view of a portable information terminal according to one embodiment of the invention.
Fig. 2 is a perspective view of a movie style of the portable information terminal according to one embodiment of the invention.
Fig. 3 is a perspective view in a state where a 2-axis hinge unit is mounted on the portable information terminal.
Fig. 4 is an exploded perspective view of the 2-axis hinge unit.
Fig. 5 is a partial sectional view of the 2-axis hinge unit.
Fig. 6(a) is an enlarged view of a rotation regulating part of the 2-axis hinge unit in a folding state, and Fig. 6(b) is an enlarged view of the rotation regulating part of the 2-axis hinge unit in a developed state at an angle of 90 degrees.
Fig. 7 is an enlarged view of a rotary regulating part of a 2-axis hinge unit in another embodiment, in which Fig. 7(a) is an enlarged view of the rotation regulating part of the 2-axis hinge unit in a folding state, and Fig. 7(b) is an enlarged view of the rotation regulating part of the 2-axis hinge unit in a developed state at an angle of 90°.
Fig. 8 is a developed perspective view of a portable information terminal in which rotation regulating structure is constituted by an armored cover.
Fig. 9 is an enlarged perspective view of the rotation regulating part when rotary regulation is applied by the armored cover.

### <Description of Reference Numerals and Signs>

- 1: Monitor casing
- 2: Liquid crystal panel
- 3: Speaker
- 4: Operational casing
- 5: Operation key
- 6: Microphone
- 7: 2-axis hinge unit
- 8: Camera
- 9: Cover
- 10: Zoom key
- 11: Bracket
- 12: Opening and closing shaft member (cam side)
- 13: Opening and closing shaft member (bearing side)
- 14: Fixing plate
- 15: Snap ring
- 16,20: Rotary concave cam
- 17,19: Fixing convex cam
- 18: Compression spring
- 21: Housing
- 22: Rotary shaft member
- 23: Coned disc spring
- 24: Rotary concave cam
- 25: Fixing convex cam
- 31, 32: Cover (monitor casing side)
- 33, 34: Hinge cover
- 35, 36: Cover (Operational casing side)

### <Best Mode for Carrying Out the Invention>

One embodiment of a portable information terminal according to the invention will be described below with reference to drawings.

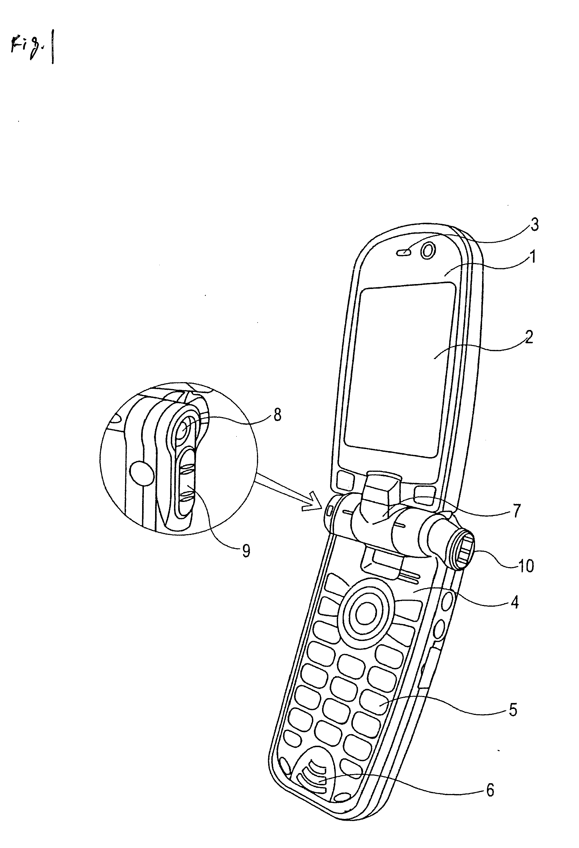

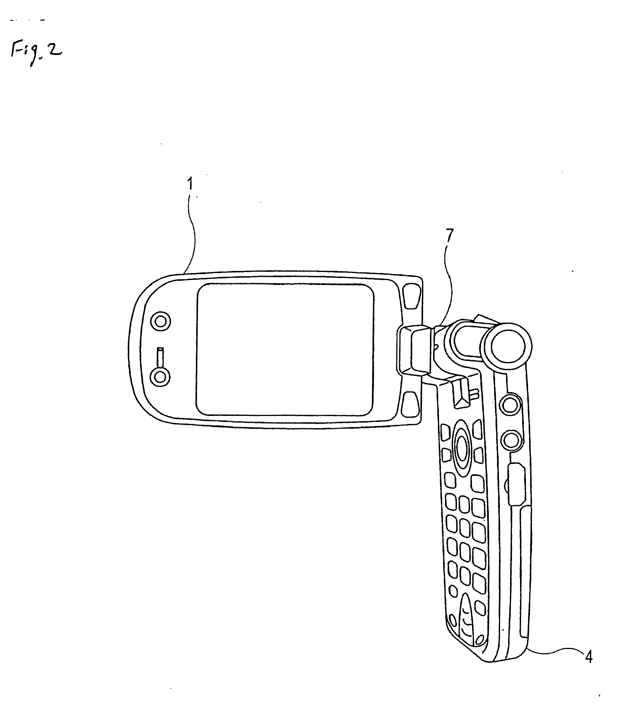

Fig. 1 is an external perspective view of a mobile telephone terminal as an example of a portable information terminal in a state where casings are developed because of a telephone call. Fig. 2 is an external perspective view of the mobile telephone terminal in a state where a camera is used in a movie style.

In Fig. 1, a monitor casing 1 includes a liquid crystal panel 2 and a speaker 3, and an operational casing 4 includes an operation key 5 for input and a microphone 6. The monitor casing 1 and the operational casing 4 are coupled by a 2-axis hinge unit 7. On a side surface of the operational casing 4, a camera 8 and a cover 9 for protecting the camera 8 are arranged, and a zoom operation of the camera is performed by a zoom key 10.

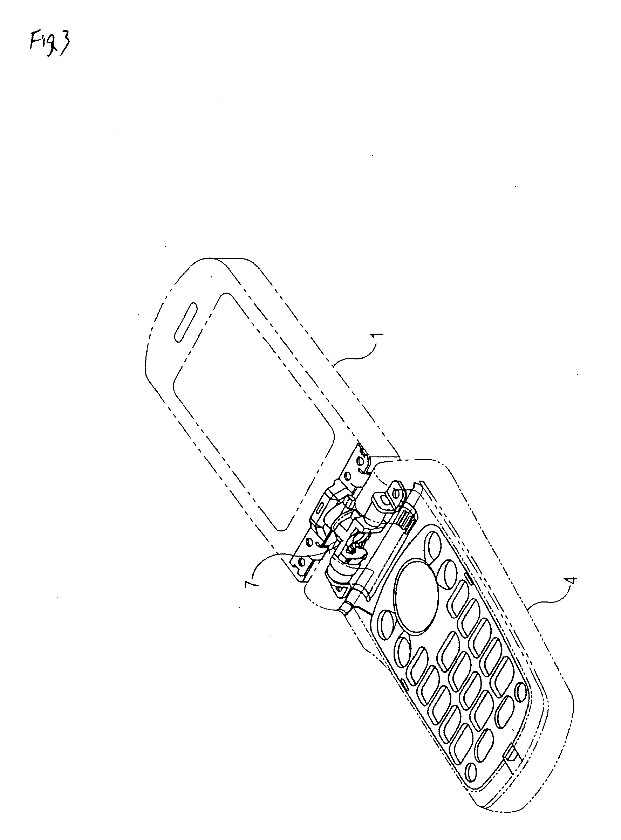

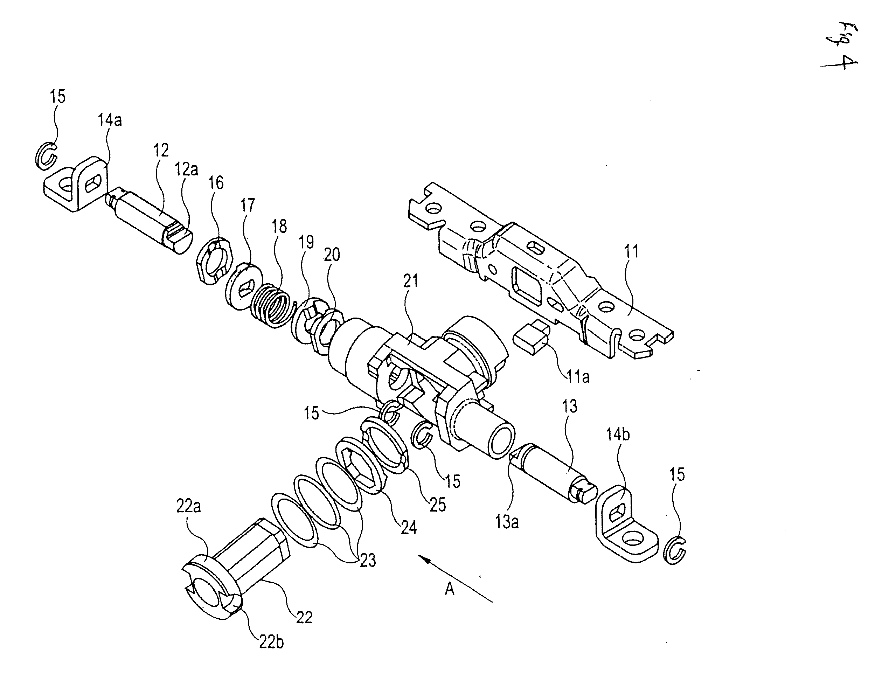

Fig. 3 is a perspective view in a state where the 2-axis hinge unit 7 is mounted on the mobile telephone terminal, Fig. 4 is an exploded perspective view of the 2-axis hinge unit, and

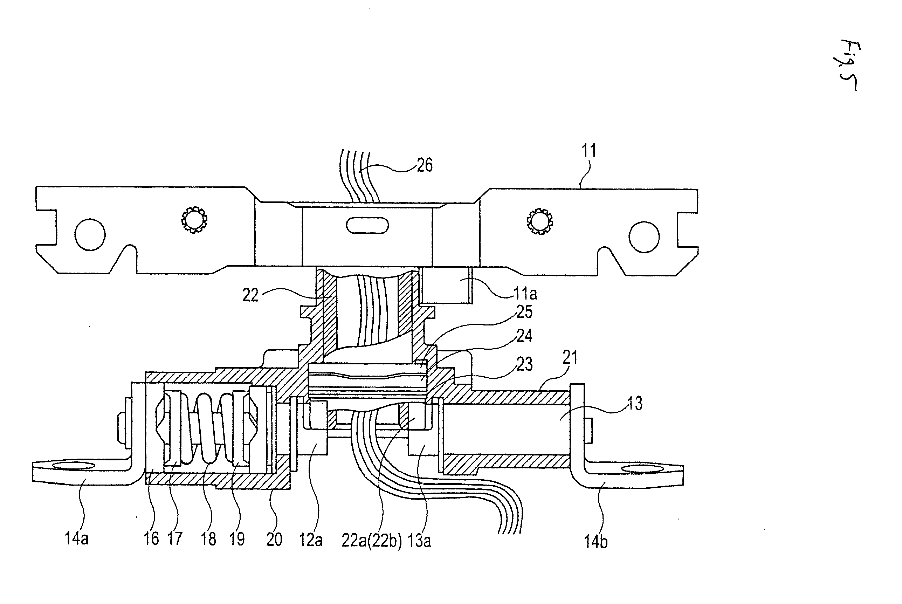

Fig. 5 is a partial sectional view of the 2-axis hinge unit.

The 2-axis hinge unit constituting a 2-axis hinge will be described in detail with reference to Figs. 4 and 5. The 2-axis hinge unit includes a housing 21 arranged in the operational casing 4, and an opening and closing shaft part and a rotary shaft part attached to the housing 21, which will be described later.

Firstly, of the 2-axis hinge, structure of the opening and closing shaft part will be described.

Fixing plates 14a and 14b fixed to the operational casing 4 have D-cut holes, to which opening and closing shaft members 12 and 13 are coupled unrotatably. The opening and closing shaft members 12 and 13 are inserted into the housing 21 rotatably, and are fixed by snap rings 15 in order to prevent them from falling out from the housing 21 in the axial direction.

Onto the opening and closing shaft member 12, rotary concave cams 16, 20, fixing convex cams 17, 19, and a compression spring 18 are inserted. In the rotary concave cam 16, 20, a pair of cam ridges are arranged diagonally at 180 degrees; for a cam center portion, a round hole which holds the opening and closing shaft member 12 rotatably and slidably is provided; and for cam peripheral portion, a D-cut surface which engages with the housing 21 unrotatably is provided. In the fixing convex cam 17, 19, a pair of cam ridges are arranged diagonally at 180 degrees, and the fixing convex cam 17, 19 engages with the opening and closing shaft member 12 at a D-cut surface so as to enable a slide only in the axial direction in relation to the opening and closing shaft member 12. The concave cam 16 and the convex cam 17 as well as the concave cam 20 and the convex cam 19 can engage with each other in pairs, and they are brought into pressure contact with each other by the compression spring 18. On the other hand, the opening and closing shaft member 13 engages with the housing 21 rotatably and slidably. At leading end portions of the opening and closing shaft members 12 and 13, projections 12a and 13a each having a semicircular section are provided, which constitute a second engaging part.

Next, the operation of the opening and closing shaft part will be described. When the housing 21 is opened and developed through the monitor casing 1, the fixing convex cams 17, 19 release the cam engagement by the cam ridges of the rotary concave cams 16, 20 while shifting the compression spring 19 in the compression direction. When the developing operation of the housing 21 is further continued, the cams engage again with each other by the cam ridges arranged diagonally at 180 degrees, whereby the developing operation of the housing 21 ends. The cam engaging force applied by the compression spring 18 becomes keeping force for full open/full close posture of the portable information terminal.

As described above, the opening and closing shaft part is arranged in a hollow part formed in the nearly lateral direction (in the opening and closing shaft direction of the mobile telephone terminal) in the housing 21. Though the above opening and closing shaft part is constituted by the opening and closing shaft members 12, 13, the fixing plates 14a, 14b, the snap ring 15, the rotary concave cams 16, 20, the fixing convex cams 17, 19, and the compression spring 18, this constitution is merely an example of the opening and closing shaft part. As long as the housing 21 can be fixed on the operational casing 4 in a rotatable state, the opening and closing shaft part is freely modified. Further, in case that the housing 21 can be fixed by the opening and closing shaft member 12 and the fixing plate 14a, the other opening and closing shaft member 13, the fixing plate 14b and the snap ring 15 may be omitted. In this case, the leading end of the opening and closing shaft part becomes the portion corresponding to the projection 12a of the opening and closing shaft member 12. Further, in case that the opening and closing shaft member 13, the fixing plate 14b and the snap ring 15 are not omitted, the projection 13 of the opening and closing shaft member 13 as well as the projection 12a corresponds to the leading end of the opening and closing shaft part.

Next, of the 2-axis hinge, structure of the rotary shaft part will be described.

In a center portion of a rotary shaft member 22, a round hole through which a wiring cable passes, that is, a hollow part is provided; and at the periphery of the shaft, a double D-cut surface is provided. Further, in a disc 22a formed at the shaft end on the opening and closing shaft side, a groove 22b having a nearly semicircular section is provided, which engages with the projection 12a, 13a of the opening and closing shaft members 12 and 13, and constitutes a first engaging part.

Onto the rotary shaft member 22, a rotary concave cam 24, a fixing convex cam 25 and a coned disc spring 23 are inserted, and they are rotatably held by the hosing 21. On the end surface on the monitor casing side of the rotary shaft member 22, a bracket 11 a is caulked and fixed. To the bracket 11, a rotation stopper 11 a which becomes a stopper in the rotary direction is caulked and fixed. Namely, the rotary shaft part includes the rotary shaft member 22, the rotary concave cam 24, the fixing convex cam 25 and the coned disc spring 23, and the disc 22a portion of the rotary shaft part 22 corresponds to the housing side end portion of the rotary shaft part. In the housing side end portion of the rotary shaft part, the groove 22b is formed.

The rotary shaft part, similarly to the opening and closing shaft part, generates the posture keeping force by the engagement between the rotary concave cam 24 and the fixing convex cam 25 by the spring force. However, for the purpose of space saving, not the compression spring but plural coned disc springs are used in layers.

As described above, the rotary shaft member 22 is arranged in a hollow part formed in the nearly longitudinal direction (in the rotary shaft direction of the mobile telephone terminal) in the housing 21. Therefore, the rotary shaft and the opening and closing shaft part are arranged in the housing 21 so as to cross each other at right angles. The above rotary shaft part is merely an example, and as long as the operational casing 4 and the monitor casing 1 as well as the housing 21 and the monitor casing 1 can be coupled to each other in the rotatable state, the rotary shaft part may be freely modified.

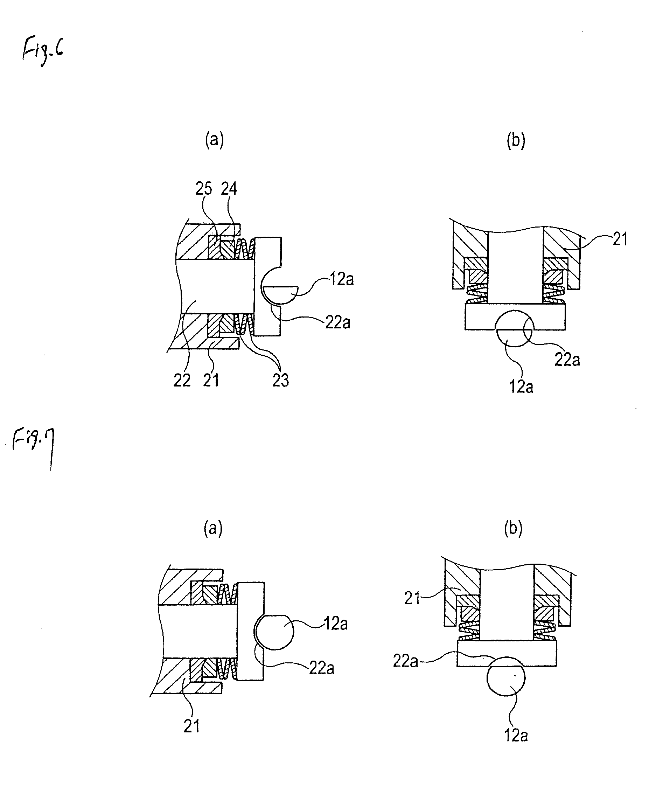

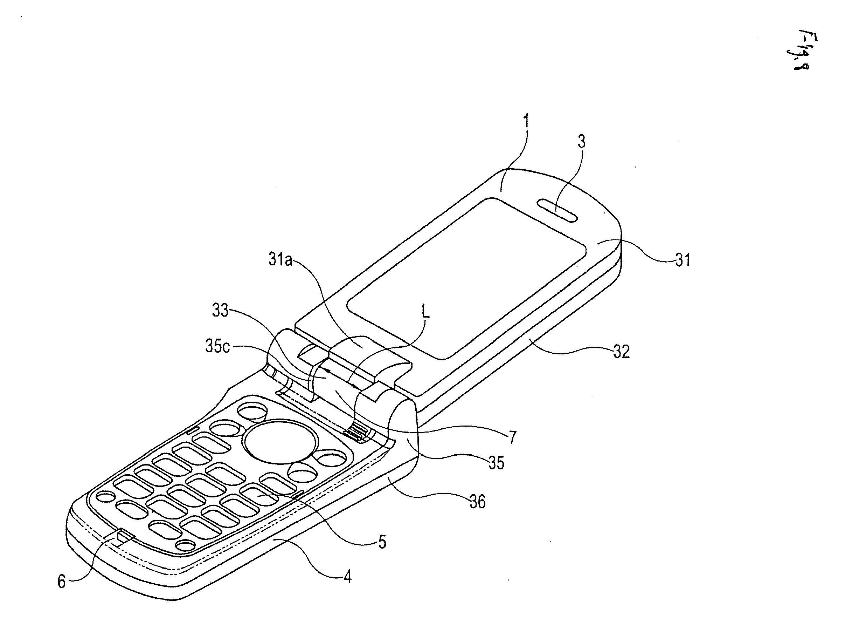

Next, rotation regulating structure will be described with reference to Figs. 6 and 7. Both Fig. 6 and Fig. 7 show an arrangement relation among the housing 21, the rotary shaft member 22 and the projection 12a of the opening and closing shaft member 12, viewed in the direction of an arrow A in Fig. 4. Though the other projection 13a is also arranged in the similar position to the position of the projection 12a, the illustration of the projection 13a is omitted.

In case that the open angle of the portable information terminal is another than 90 degrees, as shown in Fig. 6(a), the semicircular projections 12a and 13a of the opening and closing shaft members 12 and 13, and the semicircular grooves 22a of the rotary shaft member 22 engage with each other. Therefore, the rotary shaft member 22 is in an unrotatable state. Particularly, Fig. 6(a) shows a state where the open angle is 0 degree, that is, a state where the monitor casing 1 and the operational casing 4 are folded. Namely, when the open angle formed by the monitor casing 1 and the operational casing 4 is not the predetermined angle, the engaging parts (first engaging part and second engaging part) of the two casings engage with each other, and the two casings cannot rotate relatively.

When the open angle comes to 90 degrees as shown in Fig. 6(b), the semicircular projections 12a and 13a disengage from the semicircular grooves 22a. Therefore, the rotary operation of the rotary shaft member 22 becomes possible. Namely, when the monitor casing 1 and the operational casing 4 are opened at the predetermined angle, the engaging parts (first engaging part and second engaging part) of the two casings disengaged from each other, and the two casings can rotate relatively.

When, in the state where the rotary shaft member 22 is rotated from the state in Fig. 6(b), the developing operation of the portable information terminal is performed, the semicircular projections 12a, 13a cannot engage with the semicircular engaging grooves 22a provided in the disc 22a formed at the end surface of the rotary shaft member 22 and interfere with the plane portion of the shaft end surface, so that the opening and closing operation of the terminal becomes impossible.

Here, in order to enable the rotary regulation, the engaging groove 22a provided on the end surface of the rotary shaft member, and the projections 12a, 13a provided on the end surfaces of the opening and closing shaft members 12, 13, may have another shape than the semicircular section as shown in Fig. 7. In an example of Fig. 7, each of the projections 12a, 13a have a nearly D-shaped section, and the groove 22a is a groove having an arched section which can engage with the projection having the nearly D-shaped section. Fig. 7(a) shows a state where the open angle is 0°, that is, a state where the monitor casing 1 and the operational casing 4 are folded, and Fig. 7(b) shows a state where the open angle is 90° and the engagement between the projections 12a, 13a and the grooves 22a is released. Since this structure can simplify the shape of the opening and closing shaft members 12, 13, the diameter of the opening and closing shaft member can be reduced, so that the size of the 2-axis hinge is readily reduced.

In other words, in the invention, the projections 12a, 13a and the groove 22a are formed so that the combined shape of the section of the projection 12a, 13a in the longitudinal direction or in the direction perpendicular to the above opening and closing shaft part direction (in the direction A in Fig. 4), and the section of the groove 22 becomes nearly circular in case that the open angle is 90°, that is, in the state where the engagement of the projections 12a, 13a with the grooves 22a is released (refer to Figs. 6(b) and 7(b). When the section of the projection is excepted from the nearly circular shape, the section of the groove nearly remains.

As described above, when the open angle is 90°, the rotary operation of the monitor screen becomes possible; and when the monitor rotates, the opening and closing operation becomes impossible. Therefore, in the camera using time, it is possible to obtain operational properties similar to operational properties of the movie camera which is stable in monitor position.

The open angle at which the rotary shaft can rotate can be set arbitrarily by changing the relative angles of the D-cut surfaces provided for the semicircular projections 12a, 13a and the fixing plates 14a, 14b. Therefore, it is enough that the predetermined angle which is the open angle is about 90°, and the predetermined angle may be other angles.

Further, in the rotation regulating structure of the invention, the rotary shaft member 22 having the hollow part formed in the rotary shaft direction is arranged in the hollow part formed in the rotary shaft direction in the housing 21. Namely, the hollow structure can be provided for the rotary shaft part. Usually, between the monitor casing 1 and the operational casing 4, a cable for signal transmission is connected. In case that the rotary shaft part has the solid structure, the cable is arranged outside the rotary shaft. Therefore, every time the monitor casing 1 rotates, the cable winds round the rotary shaft. Accordingly, the cable having the wiring length and the extra length for winding must be arranged wound around the rotary shaft, and the winding diameter must be made small correspondingly to catching by the cable in the rotating time. In result, since the space for accommodating the cable increases, the size of the hinge unit increases. As in the invention, in case that the housing 21 and the rotary shaft member 22 have the hollow structure, as shown in Fig. 5, a cable 26 passes through the hollow parts and is arranged in the center of the rotary shaft. Therefore, even in case that the monitor casing 1 rotates, the cable is distorted and corresponds to the rotary posture of the monitor casing 1.

As described above, in case that the rotary shaft member 22 has the hollow structure, the winding-round arrangement of the cable is not required, so that the accommodating space of the hinge unit is reduced.

Further, the invention can be grasped as a 2-axis hinge for a portable information terminal having two casings coupled openably and relatively rotatably. The axis hinge includes the opening and closing shaft part, the housing, the rotary shaft part, the first engaging part, and the second engaging part. The invention is concluded even by only the 2-axis hinge.

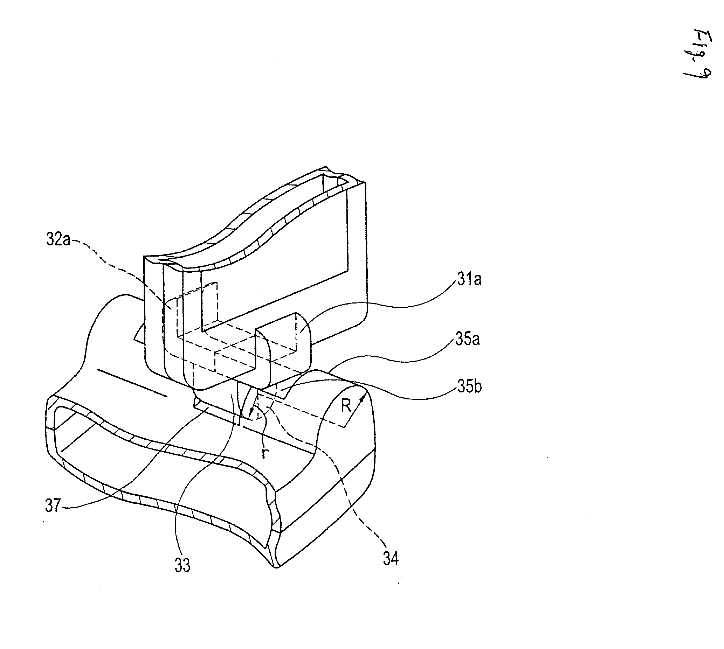

Next, another embodiment of the invention will be described with reference to Figs. 8 and 9. Also in this embodiment, the housing, the opening and closing shaft part, and the rotary shaft part in the above embodiment can be used. However, the semicircular projections 12a,13a, and the groove 22a are omitted. This embodiment is different from the above embodiment in that the rotation regulating structure is achieved by the shapes of the two housings.

Fig. 8 is a perspective view of a mobile telephone terminal in this embodiment, and Fig. 9 is an enlarged perspective view of surroundings of a 2-axis hinge when a monitor casing rotates.

In Fig. 8, armor of a monitor casting 1 consists of covers 31 and 32, which are fitted to each other, and armor of an operational housing 4 consists of covers 35 and 36, which are fitted to each other. Further, armor of a 2-axis hinge unit 7 consists of hinge covers 33 and 34, which are fitted to each other.

For the cover 31 and the cover 32 on the monitor casing side, projections 31 a and 32a having the same width as the width L of the hinge cover 33, 34, and larger thickness than the width L (Fig. 8) of the hinge covers 33 and 34 are provided near the hinge covers.

For the cover 35 on the operational casing side, a 2-axis hinge unit accommodating part 35a having a semicircular section of a radius R is provided, which includes a plane surface 35b formed by removing a part of the accommodating part 35a. Further, in the central portion in the lateral direction of the plane surface 35b, an accommodating concave part 37 is formed. Accordingly, the plane surface 35b is provided adjacently to the accommodating concave part 37.

In the hinge cover 33, 34, the leading end surface which comes into contact with the operational casing 4 has the semicircular section of a radium r. Centers of the radius R and the radius r coincide with a center of a hinge opening and closing shaft, and there is a relation of R>r. By this relation, the plane surface 35b is formed in the accommodating part 35a in an exposed state. Further, the plane surface 35b is provided in a position which is higher than the hinge opening and closing shaft center by r, and the lower surfaces of the projection parts 31 a and 32a, that is, the end surfaces on the operational casing 4 side of the projection parts 31 a and 32a contact-slide in relation to the plane surface 35b when the monitor casing 1 rotates. Namely, in this example, a distance between a center of the hinge cover 33, 34 of which the leading end surface has the semicircular section, and the lower surface of the projection part 31 a, 32a is r. However, the end surfaces on the operational casing 4 side of the projection parts 31 a and 32a do not contact-slide necessarily in relation to the plane surface 35b, but the end surfaces and the plane surface 35b may be put in the close state.

In case that the portable information terminal performs the developing operation, both side surfaces of the projection part 31 a, 32a interfere with a regulation surface 35c (Fig. 8) constituting the side surface of the accommodating concave part 37 and are regulated, so that the rotary operation of the monitor casing 1 becomes impossible. When the open angle comes to 90°, the both side surfaces of the projection part 31 a, 32a disengage from the regulating surface 35c, and the interference is released. Therefore, the rotary operation of the monitor casing 1 becomes possible. In this case, since the plane surface 35b interferes with the lower surfaces of the projection parts 31 a, 32a, the opening and closing operation is impossible. Further, since the plane surface 35b is the armored surface, a resin tap having lubricity may be attached on the plane surface 35b in order to protect the plane surface 35b from the slide of the projection parts 31 a, 32a in the rotating time.

Although the various embodiments of the invention have been described above, the invention is not limited to the matter indicated in the embodiments, it is also intended by those skilled in the art to make changes and application of the invention on the basis of the scope of the claims, the description of the specification and the known technology, and the changes and application are included in the range in which protection is sought. Particularly, the shapes and constitutions of the first engaging part and the second engaging projection, and the accommodating concave part, as long as the advantages of the invention are obtained, can be freely changed.

Although the invention has been described in detail and with reference to the specified embodiments, it will be obvious to those skilled in the art that various changes and modifications may be made without departing from the spirit and scope of the invention.

This application is based on Japanese Patent Application No. 2004-190997 filed on June 29, 2004 which is herein incorporated by reference.

### <Industrial Applicability>

As described above, the portable information terminal of the invention can reduce the sizes of the 2-axis hinge and the cable accommodating space while including the rotation regulating structure, so that a slim size that is good in portability can be realized. In case that the rotation regulating structure is constituted by the cover of the portable information terminal, the weight can be reduced, so that the weight reduction of the portable information terminal can be performed.

## Claims

1. A portable information terminal comprising:
a first casing;
a second casing; and
a 2-axis hinge which couples said first casing and said second casing in an openable and relatively rotatable manner,
wherein
said 2-axis hinge includes an opening and closing shaft part provided for the first casing, a housing which is held by said opening and closing shaft part in a rotatable state around an axis in the axial direction of said opening and closing shaft part, and a rotary shaft part which couples said housing and said second casing in a relatively rotatable manner around an axis in the vertical direction to the axial direction of said opening and closing shaft part;
said rotary shaft part has a first engaging part at an end portion on said housing side;
said opening and closing shaft part has a second engaging part which can engage with said first engaging part;
said first engaging part and said second engaging part, when said first casing and said second casing are opened at a predetermined angle (A), are disengaged from each other thereby to make said first casing and said second casing relatively rotatable, and said first engaging part and said second engaging part, when the open angle formed by said first casing and said second casing is not the predetermined angle (B), are engaged with each other thereby to make the relative rotation of said first casing and said second casing impossible; and
said first engaging part and said second engaging part are formed so that the combined shape of a section of said first engaging part and a section of said second engaging part becomes nearly circular in the above (A) state.

2. The portable information terminal according to Claim 1, wherein said housing has a hollow part formed in a direction which coincides with the axial direction of said opening and closing shaft part and the axial direction of said rotary shaft part, and said rotary shaft part has a hollow part and is arranged in the hollow part of said housing.

3. The portable information terminal according to Claim 2, wherein a cable connected between said first casing and said second casing is arranged in the hollow part of said rotary shaft part.

4. The portable information terminal according to any one of Claims 1 to 3, wherein
said first engaging part is a groove having a semicircular section; and
said second engaging part is a projection having a semicircular section, which can engage with said groove.

5. The portable information terminal according to any one of Claims 1 to 3, wherein
said first engaging part is a groove having an arched section; and
said second engaging part is a projection having a nearly D-shaped section, which can engage with said groove.

6. The portable information terminal according to any one of Claims 1 to 5, wherein said predetermined angle is about 90 degrees.

7. The portable information terminal according to any one of Claims 1 to 6, wherein said first casing is an operational casing having an operational part, and said second casing is a monitor casing having a monitor part.

8. A 2-axis hinge for a portable information terminal having two casings coupled in an openable and relatively rotatable manner, comprising:
an opening and closing shaft part;
a housing which is held by said opening and closing shaft part in a rotatable state around an axis in the axial direction of said opening and closing shaft part; and
a rotary shaft part held by said housing in a rotatable state around an axis in the vertical direction to the axial direction of said opening and closing shaft part;
wherein
said rotary shaft part has a first engaging part at an end portion on said housing side;
said opening and closing shaft part has a second engaging part which can engage with said first engaging part;
said first engaging part and said second engaging part, when said opening and closing shaft part and said rotary shaft part are opened at a predetermined angle (A), are disengaged from each other thereby to make said opening and closing shaft part and said rotary shaft part relatively rotatable, and said first engaging part and said second engaging part, when the open angle formed by said opening and closing shaft part and said rotary shaft part is not the predetermined angle (B), are engaged with each other thereby to make the relative rotation of said opening and closing shaft part and said rotary shaft part impossible; and
said first engaging part and said second engaging part are formed so that the combined shape of a section of said first engaging part and a section of said second engaging part becomes nearly circular in the above (A) state.

9. The 2-axis hinge for the portable information terminal according to Claim 8, wherein said housing has a hollow part formed in a direction which coincides with the axial direction of said opening and closing shaft part and the axial direction of said rotary shaft part, and said rotary shaft part has a hollow part and is arranged in the hollow part of said housing.

10. The 2-axis hinge for the portable information terminal according to either Claim 8 or claim 9, wherein
said first engaging part is a groove having a semicircular section; and
said second engaging part is a projection having a semicircular section, which can engage with said groove.

11. The 2-axis hinge for the portable information terminal according to either Claim 8 or Claim 9, wherein
said first engaging part is a groove having an arched section; and
said second engaging part is a projection having a nearly D-shaped section, which can engage with said groove.

12. The 2-axis hinge for the portable information terminal according to any one of Claims 8 to 11, wherein said predetermined angle is about 90 degrees.
